# EUROPEAN PATENT APPLICATION

(11) **EP 1 967 103 A1**
(43) Date of publication of application: **10.09.2008**
(21) Application number: 08380061.5
(22) Date of filing: 29.02.2008
(51) Int. Cl.: A47J 39/00, A47F 3/00

(54) **Machine to prevent bread toughness**

(30) Priority: 05.03.2007 ES 200700573
(71) Applicant: Villanueva Merino, Luis, 48003 Bilbao Vizcaya (ES)
(72) Inventor: Villanueva Merino, Luis, 48003 Bilbao Vizcaya (ES)
(74) Representative: Canadell-Isern, Roberto

(57) **Abstract**

**Machine to prevent bread toughness,** constituted by a container case of variable size, the structure (1) of which is made of isothermal material for food products; this structure (1) is provided with double glass sliding doors (6) that close hermetically; inside the case there is a set of stainless steel grated racks (5) arranged on several parallel shelves installed all along the inside extension of the case; these racks (5) are used for placing on them the products to be kept fresh and crispy; for this purpose a hot air circulation closed circuit (2) is provided in the central rear of the case interior, provided with a suction turbine (3) at the top which in turn is connected to a resistance (4) that acts as a temperature regulation thermostat.

## Description

### OBJECT OF THE INVENTION

The object of this Invention is a machine to prevent bread toughness that contributes several advantages to the purpose for which it is intended, which will be explained hereinafter, apart from others inherent in its organization and constitution.

### FIELD OF THE INVENTION

This invention is included in the technical sector of bread preservation processes within the food industry, more specifically in the sector involving systems to prevent the moisture of bread crumb from migrating to the crust, thus not allowing retrogradation of the starches to occur.

### BACKGROUND OF THE INVENTION

At present, and as a reference to the state of the art, it should be mentioned that, within the food industry and in the sector of food preservation, specifically bread preservation, there are currently no studies or projects that solve the problem of migration of crumb moisture to the crust (this causes what is commonly known as "tough bread"), which happens when the bread cools.

With modern baking systems in stationary or rotating cart ovens, heat transmission is by convection through heated and recycled air, and this heat is used for baking. The bread bakes in a steam saturated atmosphere, and this water vapor is produced by mechanisms called steam generators.

Water vapor settles on the outside of the dough at the very moment it is put into the oven, covering the exterior surface with a fine layer of water. This condensation is due to the difference in temperature between the dough (around 28°C) and the steam (100°C), which causes humidification and achieves a long enough time lag to neutralize the effect of the heat before the crust forms; the steam has multiple functions, and its influence is manifested in the development of the pieces of bread, increasing the volume and making the surface softer and thus assisting the dilation caused by CO2 (carbonic gas produced during the fermentation of bread).

The crust begins to form 8 or 10 minutes after baking begins and what is known as "rising" occurs; the starch swells up, the alcohol volatilizes and this releases CO2. Around 100°C, part of the water of the dough begins to evaporate, producing secondary steam. On approaching approximately 130°C, the crust continues to form and the reddish color caused by the caramelization of the sugars under the influence of the heat and moisture (Maillard Reaction) begins to appear. The Maillard Reaction has three successive phases that are listed below:

1^{a}. - There is no heat production. In this phase, the sugars and the amino acids join. Subsequently the reaction called Amadori rearrangement occurs (sugars + proteins without water cause this rearrangement).

2^{a}.- There is the early formation of very light yellow colors, as well as the production of somewhat disagreeable odors. In this phase, the sugars dehydrate, forming the reductones or dehydro-reductones, and after this the fragmentation beings. In the next step, known as Strecker degradation, the reducing compounds that facilitate the formation of the pigments are generated.

3^{a}.- In this last phase, the so-called dark pigments, called melanoidins, are formed; the mechanism is not fully understood, but it is known for sure that it involves the polymerization of many of the compounds formed in the preceding second phase.

Baking is considered to be complete when the inside of the bread reaches 99°C, which will depend on the size of the pieces and the oven temperature.

Because of this baking system, the crumb moisture is very high (around 75% to 90%), and the crust is very weak.

After the bread is baked and removed from the oven, it undergoes a contrast in temperature.

This abrupt change of temperature causes the crust to flake.

During a longer or shorter bread cooling time, the crust stays crisp. After that time, which will depend on ambient humidity, the water contained in the crumb begins to migrate towards the crust, the starches retrograde and a rearrangement of the links between molecules occurs. All this leads to decreased digestibility.

When the crust is tough, it is much harder to chew and it forms a ball that is not moistened by saliva. When it is ingested into the stomach in that condition, it causes acidity and poor absorption of nutrients, and could even damage the intestinal flora.

It would therefore be desirable to devise a method to preserve bread under conditions that prevent that migration of moisture from the crumb to the crust, likewise preventing the retrogradation of starches.

To do so, this invention focuses on a process of temperature regulation via a circuit that maintains a constant current of air, preventing the moisture of the crumb from migrating to the crust. This keeps the bread crisp during a lengthy period of time, which helps with digestion. Another favorable effect is that it strengthens the teeth, as a hard product is being chewed and at the same time the food is moistened with saliva for a longer time, meaning predigestion takes place in the mouth.

Another advantage presented by the maintenance system is that it isolates the product from the exterior, thus preventing all contact with ambient contamination.

### DETAILED DESCRIPTION OF THE INVENTION

The machine to prevent bread toughness, which is the object of this invention, proposes a new system to maintain the product at a certain temperature, as well as constructive aspects of construction and installation to achieve this maintenance under optimum conditions.

The machine in this invention is constituted in the form of a container case of variable size, the structure of which is made of isothermal material for food products. To prevent external contamination and to optimize the maintenance system, double glass sliding doors are used that close hermetically. A set of stainless steel grated racks on several parallel shelves are installed all along the inside extension of the case. These racks are used for placing on them the products to be kept fresh and crispy (such as bread, bakery products, etc.). A hot air closed circuit is installed in the central rear of the case interior, with a turbine at the top which in turn is connected to a resistance that acts as a thermostat for regulating the temperature.

Likewise, a temperature indicator is provided to be able to know at all times what the temperature is inside the machine.

In addition, a general switch is provided with a sound regulator, which is located on the upper portion for greater convenience of the people operating it.

To complement the description that is provided hereinafter and in order to help better understand its characteristics, this description is accompanied by a set of drawings whose figures show, on an illustrative and non-limitative basis, the most significant details of the invention.

### BRIEF DESCRIPTION OF THE FIGURES

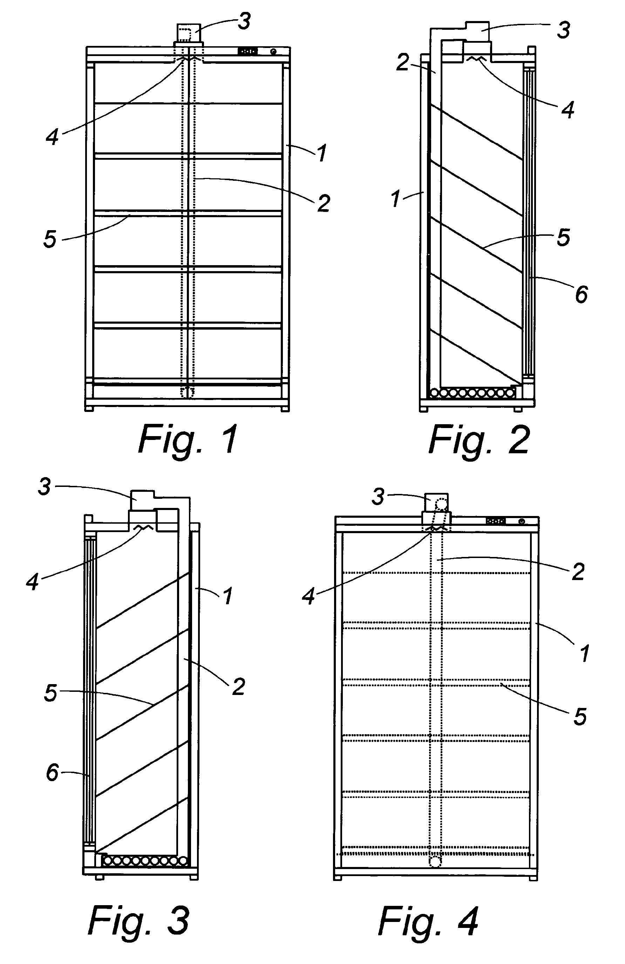

Figure 1. Shows a front view of a possible practical execution of the machine that is the object of this invention.
Figures 2 and 3. Each shows a side view of the machine.
Figure 4. Shows a rear view of this machine.

### DESCRIPTION OF AN EXECUTION EXAMPLE OF THE INVENTION

With the above mentioned figures in view and in accordance with the numbering used, an illustrative, although non-limitative, practical exeuction of the invention can be seen. This consists of a machine to prevent bread toughness, constituted by a container case of variable size, the structure (1) of which is made of isothermal material for food products and that is provided with double glass sliding doors (6) that close hermetically. A set of stainless steel grated racks (5) on several parallel shelves are installed all along the inside extension of the case. These racks are for placing on them the products to be kept fresh and crispy.

A hot air circulation closed circuit (2) is installed in the central rear of the case interior, provided with a suction turbine (3) at the top which in turn is connected to a resistance (4) that acts as a thermostat for regulating the temperature, which can be known at all times by means of the corresponding indicator.

The machine also has a general switch with a sound regulator, located on the upper portion, and a control board with digital thermostat.

## Claims

1. MACHINE TO PREVENT BREAD TOUGHNESS, essentially **characterized by** the fact that it is constituted by a container case of variable size, the structure (1) of which is made of isothermal material for food products; this structure (1) is provided with double glass sliding doors (6) that close hermetically; inside the case there is a set of stainless steel grated racks (5) arranged on several parallel shelves installed all along the inside extension of the case; these racks (5) are used for placing on them the products to be kept fresh and crispy; for this purpose a hot air circulation closed circuit (2) is provided in the central rear of the case interior, provided with a suction turbine (3) at the top which in turn is connected to a resistance (4) that acts as a temperature regulation thermostat.
